# EUROPEAN PATENT SPECIFICATION

(11) **EP 4 636 296 B1**
(45) Date of publication and mention of the grant of the patent: **19.08.2026**
(21) Application number: 24382383.8
(22) Date of filing: 15.04.2024
(51) Int. Cl.: F16M 11/12, F16M 11/18

(54) **REMOTE ACTUATION DEVICE FOR TIP AND TILT CONTROL**
FERNBETÄTIGUNGSVORRICHTUNG ZUR KIPP- UND KIPPSTEUERUNG
DISPOSITIF D'ACTIONNEMENT À DISTANCE POUR COMMANDE DE L'INCLINAISON ET DE BASCULEMENT

(43) Date of publication of application: 22.10.2025
(73) Proprietor: Idom, S.A.U., 48015 Bilbao, Bizkaia (ES)
(72) Inventor: VIZCARGÜENAGA VIZCARGÜENAGA, Alberto, 48015 BILBAO-BIZKAIA (ES); ZARRAOA GARMENDIA, Amaia, 48015 BILBAO-BIZKAIA (ES); LARRINGAN ZARATE, Asier, 48015 BILBAO-BIZKAIA (ES); URRUTIA SAGASTI, Ander, 48015 BILBAO-BIZKAIA (ES)
(74) Representative: Urizar Villate, Ignacio

(56) References cited:
- EP-B1- 3 101 327
- JP-B2- 6 223 196
- US-A- 4 282 529

## Description

### Technical field

The present invention relates to the technical field of precision mechanical transmission, and more specifically, to precision aiming devices. It can also fall within the technical sector of supports for parts, devices or articles placed on them; handlers and system to maintain the orientation of a load.

### State of the art

In the state of the art there are several actuation devices for controlling two axles, tip and tilt, some of them controlled remotely. However, there are applications in which a remote actuation based on control signals cannot be implemented, but rather the movement must be carried out through mechanical transmissions, since these devices work in spaces and under environmental conditions that do not allow the emission and/or transmission of control signals or placing actuators on the device itself.

Some devices are for example known from US 4 282 529 A, JP 6 223196 B2 or EP 3 101 327 B1.

For example, in the MAST-U (Mega Ampere Spherical Tokamak Upgrade), a mirror must be positioned and directed to guide the RF waves to heat the plasma, requiring great precision and speed for this operation. These mirror movements are required to guide the heating pulses to some specific areas of the plasma, keeping the beam insertion static. In this environment of high temperatures, in vacuum, and with high electromagnetic loads, it is not possible to place actuators near the device, requiring the use of remote actuation means. Therefore, it is necessary to resort to devices that are mechanically operated from a point far from the place where the load is located.

### Description of the invention

Based on the prior art, an object of the present invention is to provide a remote actuation device for tip and tilt control in two axles, having the features in claim 1.

The object of the invention is a compact tilt and tilt control mechanism, operated from a distance, capable of overcoming large distances and poor relative positions between the load and the linear control actuators of said mechanism. This mechanism is designed as two steps orthogonally oriented and nested together to achieve the desired two-degree-of-freedom mechanism. The transmission of the two degrees of freedom is provided by means of a pulley system made up of two idler pulleys and one fixed pulley, actuated by a single cable preloaded by means of a spring. The two idler pulleys rotate around the tipping axle, while the fixed pulley is attached at the tilting axle to the support of the mounting surface for mounting the controlled load. The cable is fixed to the fixed pulley and passed through the two idler pulleys to two actuators. The system operates as a differential mechanism, either by joint push-pull action for tilting movement or by differential push-pull for tipping movement. A single spring provides the required preload for both degrees of freedom.

The proposed device optimises the transmission from the actuators to the load to be controlled in two degrees of freedom, tipping and tilting, by means of a highly adaptable cable and pulley system, which makes it suitable for integration thereof in difficult-to-access areas in which the actuators cannot be close to the controlled load.

### Description of the drawings

As a complement to the description provided herein, and for the purpose of helping to make the features of the invention more readily understandable, the present specification is accompanied by a set of drawings which, by way of illustration and not limitation, represent the following:

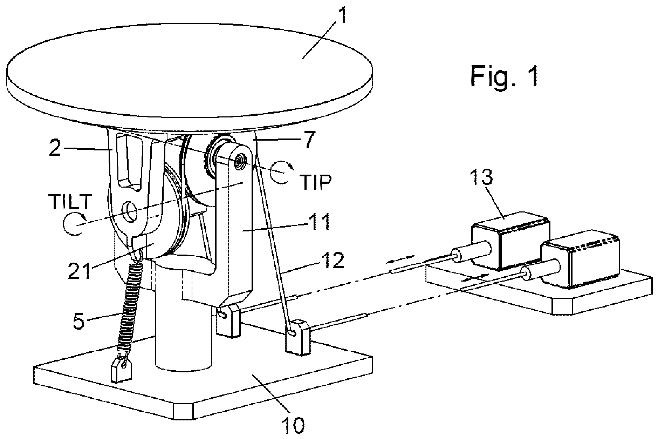

- Figure 1 shows a perspective view of the device of the invention.

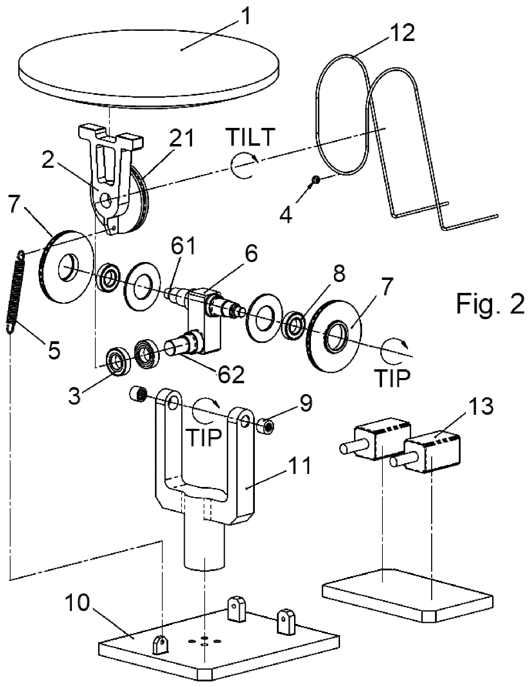

- Figure 2 shows an exploded perspective view of all the elements that make up this device.
- Figures 3-5 show this device when rotating around the tilting axle (TILT).
- Figures 6-8 show this device when rotating around the tipping axle (TIP).

### Embodiment of the invention

The following elements have been referenced in the figures:
(1) surface of the controlled load
(2) support of the loading surface, with a pulley (21) fixed therein
(3) bearing for the tilting axle (TILT) (62)
(4) fixation of the cable (12) on the fixed pulley (21)
(5) spring
(6) axle
(7) idler pulleys (TIP)
(8) bearings for the idler pulleys (7)
(9) bearings for the axle (6)
(10) base of the mechanism
(11) support of the mechanism
(12) cable
(13) linear actuator of the mechanism
(14) base of the linear actuator

The device of the invention comprises a mechanism mounted on a base (10), to which a Y-shaped support (11) is fixed, which defines between its wings a tipping rotation axle (TIP) of a support (2) of the surface of the controlled load (1), which is actuated by means of a fixed pulley (21) that allows said support (2) to move according to a second tilting rotation axle (TILT). In turn, the support (2) of the surface of the load (1) and the Y-shaped support (11) of the mechanism are related through an axle (6), the ends (61) of which rotate in said support (11) forming the tipping rotation axle (TIP). In the opposite direction to the load (1), the axle (6) has an extension at the end of which it has a second axle (62), orthogonal with respect to the previous one, on which the support (2) is mounted with the possibility of tilting rotation (TILT).

With this configuration, the mechanism is designed with two degrees of freedom of rotation: a first tipping rotation axle (TIP) of the surface of the load (1), made up of two idler pulleys (7), which rotate at the ends (61) of an axle (6), in the respective bearings (8) and a second tilting rotation axle (TILT) that is made up of a pulley (21), fixed in the support (2) of the surface of the load (1), and with the possibility of rotating on the same axle (62) as said support (2). A cable (12) is fixed by means of an element (4) to the fixed pulley (21) and is passed through the two idler pulleys (7) to two actuators (13), consisting of two push-pull motors, one at each end of the cable (12), so that it is actively actuated in both axles.

The pulley system is preloaded by a spring (5) that connects the surface of the load (1) with the base (10) of the mechanism. As designed, this spring would be capable of providing the required preload for both degrees of freedom, both tipping and tilting movements.

In one embodiment, the tipping (TIP) and tilting (TILT) axles are offset from the surface of the load (1) to provide a simpler embodiment, which does not require using any pulley to redirect the cables, the tipping axle (TIP) is the one closest to the surface of the load (1), while the tilting axle (TILT) is the one that is furthest from the same.

Relative rotational movements between components are provided by means of ball bearings. The idler pulleys (7) are mounted on the axle (6), and the ends (61) of said axle (6) are mounted on the support (11) through bearings (8, 9), and the support (2) of the surface of the load (1) is mounted on the axle (6) through a bearing (3).

The controlled load (1) is supported on the support (2) in a cantilever configuration, said support being displaced towards the outside of the surface of the load (1) in the direction of the tilting axle (TILT), which provides a very flexible design capable of adapting to different steering ranges with minimal modifications.

In addition to the aforementioned operating features, this device optionally provides mechanical stops to limit the tipping (TIP) and tilting (TILT) range thereof and to provide discrete positions such as the stationary position and additional positions of interest.

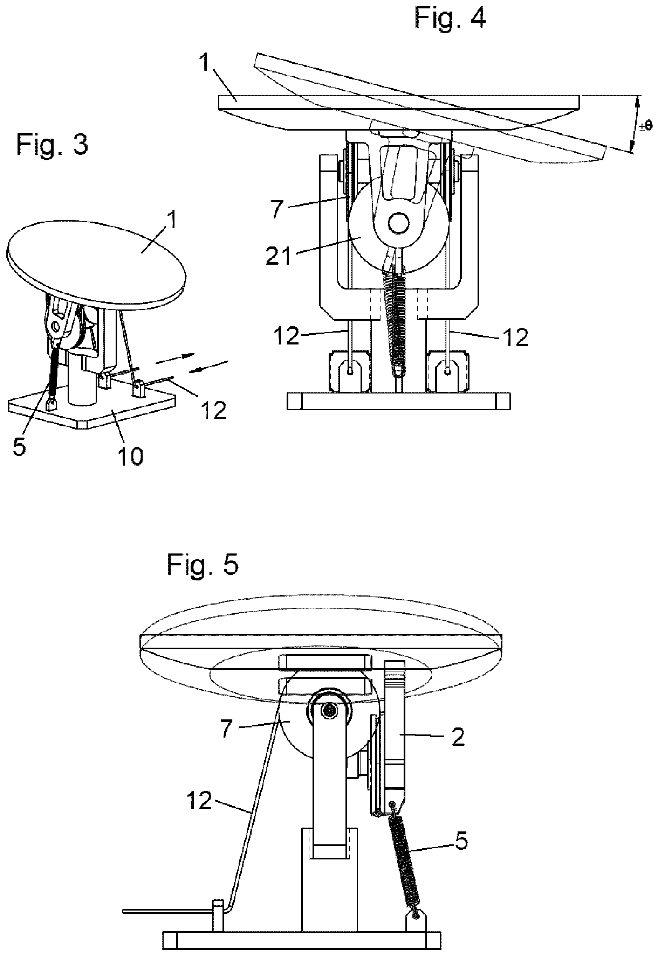

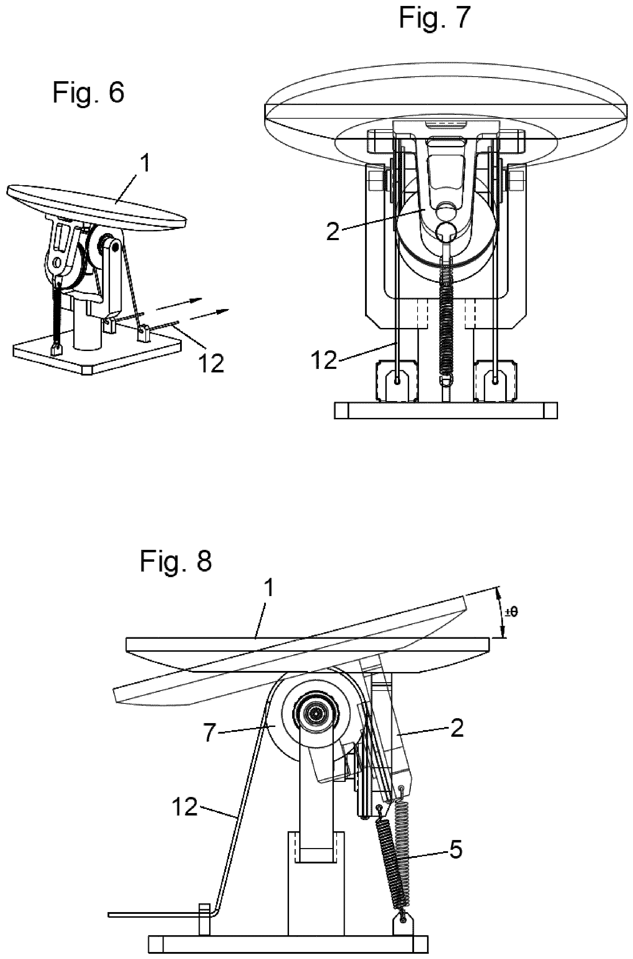

This device is actuated by means of two linear actuators (13), located in a position far from the mechanism itself, which transmit to the cable (12) a combined push/pull action depending on the desired movement on the surface of the load (1), so that the system works as a differential device, either by a joint push-pull action for the tilting movement (TILT) or by a differential push-pull action for the tipping movement (TIP).
- When both actuators (13) perform the same pulling or pushing movement but in opposite directions, the fixed pulley (21) is forced to rotate around its own axle (62), and consequently the support (2) also rotates in the tilting direction (TILT) and since the surface of the load (1) is fixed to said support (2), same also rotates around the tilting axle (TILT) as shown in figures 3-5.
- On the contrary, when both actuators (13) pull or release the cable (12) in the same direction, the cable pulls the fixed pulley (21) or lets the spring (5) pull therefrom in the opposite direction, so that the support (2) of the surface of the load (1) rotates jointly with the axle (6) that coincides with the tipping axle (TIP), as seen in figures 6-8.

The cable (12) has a clamping fitting (4) which houses same in the fixed pulley (21), thus ensuring rotation about this axle.

The pulleys (7, 21) have been defined in accordance with the cable (12) that they must house, which in turn has been defined to support the operating loads and provide maximum rigidity to the device. In a preferred embodiment this cable is made of steel; if required, of stainless steel.

Having described the nature of the invention, as well as a preferred exemplary embodiment, it is obvious that the invention is industrially applicable in the indicated sector.

Likewise, it is hereby stated for all appropriate purposes that the materials, shape, size, and arrangement of the described elements can be modified, provided that this does not entail altering the essential features of the invention claimed below:

## Claims

1. A remote actuation device for tip and tilt control comprising:
- a Y-shaped support (11) that mounts between its wings a rotation axle (6), which defines a tipping rotation axle (TIP) of a support (2) of the surface of the controlled load (1), which comprises two lateral ends (61) in which two idler pulleys (7) are mounted through which a cable (12) runs which, depending on whether it is pulled or pushed, in both directions at the same time, makes said support (2) rotate according to the tipping axle (TIP),
- an axle (6) that has an orthogonal extension, at the end of which it has a second axle (62) on which the support (2) is mounted with the possibility of rotation according to a tilting axle (TILT), which comprises in correspondence with said axle a pulley (21) fixed on said support (2), to which a cable (12) is fixed which, when pulling and pushing from the ends thereof in opposite directions, rotates the pulley (21) and consequently the support (2) in the tilting rotation axle (TILT),
- a support (2) for a surface of the load (1), mounted with the possibility of tilting rotation on a second axle (62) and tipping rotation when the axle (6) in which said second axle (62) is formed is rotated,
- a spring (5) which connects the support (2) of the surface of the load (1) with the base (10) of the mechanism, which provides the required preload for the tipping movement (TIP),
- a cable (12) that is fixed on a pulley (21), fixed to the support (2), which passes through two idler pulleys (7), which rotate freely at the ends (61) of the axle (6),
- actuators (13) that pull/push the ends of the cable (12) in the same direction and/or in opposite directions, to move the support (2) of the surface of the load (1) by tipping (TIP) or tilting (TILT) respectively.

2. The device, according to claim 1, in which the support (2) is fixed below the surface of the controlled load (1) displaced from the centre of the surface thereof in the direction of the tilting axle (TILT) outwards, while the rotation axle (6) that defines the tipping axle (TIP) is located in correspondence with the centre of the surface of the load.

3. The device, according to any of the preceding claims, wherein the tipping axle (TIP) is closer to the surface of the load (1) than the tilting axle (TILT).

4. The device, according to any of the preceding claims, wherein the surface of the load (1) is supported on the support (2) in a cantilever configuration, said support being displaced towards the outside of the surface of the load (1) in the direction of the tilting axle (TILT).

5. The device, according to any of the preceding claims, wherein the idler pulleys (7) are mounted on the axle (6), and the ends (61) of said axle (6) are mounted on the support (11) through ball bearings (8, 9)

6. The device, according to any of the preceding claims, wherein the support (2) of the surface of the load (1) is mounted on the axle (6) through a ball bearing (3).

7. The device, according to any of the preceding claims, comprising mechanical stops to limit the tipping (TIP) and tilting (TILT) range thereof.

## Patentansprüche

1. Fernbetätigungsvorrichtung zur Kipp- und Neigungssteuerung, umfassend:
- eine Y-förmige Halterung (11), bei der zwischen ihren Flügeln eine Drehachse (6) montiert ist, die eine Kippdrehachse (TIP) einer Halterung (2) der Oberfläche der gesteuerten Last (1) definiert, die zwei seitliche Enden (61) umfasst, in denen zwei Umlenkrollen (7) montiert sind, durch die ein Kabel (12) verläuft, das je nachdem, ob es gezogen oder gedrückt wird, in beiden Richtungen gleichzeitig bewirkt, dass sich die Halterung (2) entsprechend der Kippachse (TIP) dreht,
- eine Achse (6), die eine orthogonale Verlängerung aufweist, an deren Ende sich eine zweite Achse (62) befindet, auf der die Halterung (2) mit der Möglichkeit zur Drehung entsprechend einer Neigungsachse (TILT) montiert ist, die in Übereinstimmung mit dieser Achse eine Rolle (21) umfasst, die an der Halterung (2) fixiert ist, an der ein Kabel (12) fixiert ist, das beim Ziehen und Drücken an seinen Enden in entgegengesetzte Richtungen die Rolle (21) und folglich die Halterung (2) in der Neigungsdrehachse (TILT) dreht,
- eine Halterung (2) für eine Oberfläche der Last (1), die mit der Möglichkeit zur Neigungsdrehung um eine zweite Achse (62) und zur Kippdrehung bei Drehung der Achse (6), in der die zweite Achse (62) ausgebildet ist, montiert ist,
- eine Feder (5), die die Halterung (2) der Oberfläche der Last (1) mit der Basis (10) des Mechanismus verbindet und die erforderliche Vorlast für die Kippbewegung (TIP) bereitstellt,
- ein Kabel (12), das an einer Rolle (21) fixiert ist, die an der Halterung (2) fixiert ist und durch zwei Umlenkrollen (7) verläuft, die sich an den Enden (61) der Achse (6) frei drehen,
- Stellantriebe (13), die die Enden des Kabels (12) in dieselbe Richtung und/oder in entgegengesetzte Richtungen ziehen/drücken, um die Halterung (2) der Oberfläche der Last (1) jeweils durch Kippen (TIP) oder Neigen (TILT) zu bewegen.

2. Vorrichtung nach Anspruch 1, bei der die Halterung (2) unterhalb der Oberfläche der gesteuerten Last (1) fixiert ist, die vom Mittelpunkt ihrer Oberfläche in Richtung der Neigungsachse (TILT) nach außen verschoben ist, während sich die Drehachse (6), die die Kippachse (TIP) definiert, in Übereinstimmung mit dem Mittelpunkt der Oberfläche der Last befindet.

3. Vorrichtung nach einem der vorhergehenden Ansprüche, wobei die Kippachse (TIP) näher an der Oberfläche der Last (1) liegt als die Neigungsachse (TILT).

4. Vorrichtung nach einem der vorhergehenden Ansprüche, wobei die Oberfläche der Last (1) auf der Halterung (2) in einer Auslegerkonfiguration gehaltert ist, wobei die Halterung in Richtung der Neigungsachse (TILT) zur Außenseite der Oberfläche der Last (1) hin verschoben ist.

5. Vorrichtung nach einem der vorhergehenden Ansprüche, wobei die Umlenkrollen (7) an der Achse (6) montiert sind und die Enden (61) der Achse (6) über Kugellager (8, 9) an der Halterung (11) montiert sind.

6. Vorrichtung nach einem der vorhergehenden Ansprüche, wobei die Halterung (2) für die Oberfläche der Last (1) über ein Kugellager (3) an der Achse (6) montiert ist.

7. Vorrichtung nach einem der vorhergehenden Ansprüche, umfassend mechanische Anschläge zur Begrenzung des Bereichs ihres Kippens (TIP) und Neigens (TILT).

## Revendications

1. Dispositif d'actionnement à distance pour la commande de basculement et d'inclinaison comprenant :
- un support en forme de Y (11) qui monte entre ses ailes un axe de rotation (6), lequel définit un axe de rotation de basculement (TIP) d'un support (2) de la surface de la charge commandée (1), qui comprend deux extrémités latérales (61) dans lesquelles sont montées deux poulies folles (7) à travers lesquelles circule un câble (12) qui, selon qu'il est tiré ou poussé, dans les deux sens en même temps, fait tourner ledit support (2) selon l'axe de basculement (TIP),
- un axe (6) qui présente une extension orthogonale, à l'extrémité de laquelle il présente un second axe (62) sur lequel le support (2) est monté avec la possibilité de rotation selon un axe d'inclinaison (TILT), qui comprend, en correspondance avec ledit axe, une poulie (21) fixée sur ledit support (2), à laquelle est fixé un câble (12) qui, lorsqu'il est tiré et poussé depuis ses extrémités en sens opposées, fait tourner la poulie (21) et par conséquent le support (2) dans l'axe de rotation d'inclinaison (TILT),
- un support (2) pour une surface de la charge (1), monté avec la possibilité d'une rotation d'inclinaison sur un second axe (62) et d'une rotation de basculement lorsque l'axe (6), dans lequel ledit second axe (62) est formé, est mis en rotation,
- un ressort (5) qui relie le support (2) de la surface de la charge (1) à la base (10) du mécanisme, qui fournit la précharge requise pour le mouvement de basculement (TIP),
- un câble (12) qui est fixé sur une poulie (21), fixée au support (2), qui passe à travers deux poulies folles (7), qui tournent librement aux extrémités (61) de l'axe (6),
- des actionneurs (13) qui tirent/poussent les extrémités du câble (12), dans le même sens et/ou dans des sens opposés, pour déplacer le support (2) de la surface de la charge (1) par basculement (TIP) ou inclinaison (TILT) respectivement.

2. Dispositif, selon la revendication 1, dans lequel le support (2) est fixé sous la surface de la charge commandée (1)déplacée du centre de la surface de celle-ci dans le sens de l'axe d'inclinaison (TILT) vers l'extérieur, tandis que l'axe de rotation (6) qui définit l'axe de basculement (TIP) est situé en correspondance avec le centre de la surface de la charge.

3. Dispositif, selon l'une quelconque des revendications précédentes, dans lequel l'axe de basculement (TIP) est plus proche de la surface de la charge (1) que l'axe d'inclinaison (TILT).

4. Dispositif, selon l'une quelconque des revendications précédentes, dans lequel la surface de la charge (1) est supportée sur le support (2) dans une configuration en porte-à-faux, ledit support étant déplacé vers l'extérieur de la surface de la charge (1) dans la direction de l'axe de basculement (TILT).

5. Dispositif, selon l'une quelconque des revendications précédentes, dans lequel les poulies folles (7) sont montées sur l'axe (6), et les extrémités (61) dudit axe (6) sont montées sur le support (11) par l'intermédiaire de roulements à billes (8, 9).

6. Dispositif, selon l'une quelconque des revendications précédentes, dans lequel le support (2) de la surface de la charge (1) est monté sur l'axe (6) par l'intermédiaire d'un roulement à billes (3).

7. Dispositif, selon l'une quelconque des revendications précédentes, comprenant des butées mécaniques pour limiter sa plage de basculement (TIP) et d'inclinaison (TILT).
